# EUROPEAN PATENT SPECIFICATION

(11) **EP 2 767 517 B1**
(45) Date of publication and mention of the grant of the patent: **28.09.2016**
(21) Application number: 13155647.4
(22) Date of filing: 18.02.2013
(51) Int. Cl.: C02F 9/00, C02F 1/36, C02F 1/78

(54) **DRINKING WATER DISPENSER WITH AN INTEGRATED GRAVITY-FLOW TYPE DEODORIZING SYSTEM FOR IMPROVING ORGANOLEPTIC QUALITY OF WATER**
TRINKWASSERSPENDER MIT INTEGRIERTEM SCHWERKRAFTFLUSS-DESODORIERUNGSSYSTEM ZUR VERBESSERUNG DER ORGANOLEPTISCHEN WASSERQUALITÄT
DISTRIBUTEUR D'EAU POTABLE AVEC UN SYSTÈME DE DÉSODORISATION DE TYPE À ÉCOULEMENT PAR GRAVITÉ INTÉGRÉ POUR AMÉLIORER LA QUALITÉ ORGANOLEPTIQUE DE L'EAU

(43) Date of publication of application: 20.08.2014
(73) Proprietor: Scandinavian Innovation Group Oy, 29630 Pomarkku (FI)
(72) Inventor: Pawlow, Andrzej, 1005 Riga (LV)
(74) Representative: Anohins, Vladimirs

(56) References cited:
- EP-A1- 2 363 380
- CN-A- 1 483 686
- CN-U- 202 297 296
- NL-A- 8 901 366

## Description

### Technical field

The invention relates to drinking water dispensers, particularly to dispensers connected to water main and containing an integrated gravity-flow type water deodorizing system.

### Background

A drinking water dispenser is a device intended to dispense drinking water in public places or at home. Thanks to such dispensers drinking water is available to consumers at any time, usually the dispensers are able to chill and sometimes also heat the water. The dispensers may be equipped with a replaceable gas bottle containing carbon dioxide and be capable to aerate the dispensed water. The water dispensers can dispense water from standard bottles or can be connected to the water main of a building or urban water supply.

When dispensers are connected to the urban water supply, the following problem arises. The water leaving the municipal water treatment station typically is consistent with the law of the country on the safety and quality of drinking water. But the water that comes out of the tap of the consumer may not meet these requirements because sometimes it has to cover a long distance from the water treatment station to the home or office of the consumer. A usual route of water from the treatment station to the place of consumption covers many miles of municipal water pipes, water towers, plumbing in the house of the consumer, which may be older and more contaminated than the other parts of water supply system. On this route, the drinking water may be contaminated with various substances, such as cyanides, cyanates, various organic acids, synthetic detergents, remaining in the water after flushing of pipes, rhodanite, hydrogen sulfide, sulfur dioxide, which significantly reduces the quality and organoleptic properties of the drinking water and its taste and smell leave much to be desired. Also the quality of water declines due to the intermittent use of tapwater, very often the tapwater is not used for by days, weeks and sometimes months because of absence of the consumers at home or in the office.

Moreover, chlorine and its compounds used for water disinfection at water treatment plants changes the water taste, even if the presence of chlorine is within the allowable concentration, due to very high sensitivity of a human being to that chemical. Besides changing the taste of water, the residual chlorine and its derivatives are toxic and have a negative impact on human health and even may be a factor of oncogenesis.

Water filters that are traditionally used in the dispensers connected to water main do not always achieve the desired organoleptic properties of water. In addition the performance of filters declines over time and the filters need to be replaced. Moreover, even during service time their absorbent capacity decreases and the concentration of harmful substances passing though filters increases drastically in comparison with the new ones.

Another problem associated with use of filters is a pressure drop over a filter that combined with pressure variations in the water pipelines may require installation of water pumps in dispensers, which complicates the design, reliability, and maintenance costs.

Use of ozone for water treatment is known in the art, but for various reasons ozone is used for disinfection or sterilization of water or dispensers themselves but it is not used specifically to improve the quality of already suitable for consumption water.

Use of ozone for water deodorizing is also known. However, the use of ozone for this purpose in the water dispensers, to improve the taste and odor of drinking water, did not gain wide spread acceptance for various reasons. First, because it complicates the design of the dispenser, and second, because the presence of ozone in drinking water is not desirable even in amounts acceptable by health standards.

Therefore, even if ozone is used in the dispensers, it is primarily used for the sterilization of water and the water after treatment is usually kept in an accumulating reservoir for a certain time which, depending on the concentration of ozone, may be from 10 minutes to several hours.

U.S. Patent No. 3,692,180 describes a purification device for a water dispenser in which ozone is fed over a set period of time into the water filling the tank of the dispenser. The charcoal filters remove excess ozone from the gases and water discharged from the unit.

U.S. Patent No. 3,699,776 discloses a water purifying device for a water dispenser in which ozone is supplied into a tank of water through a diffuser installed at the bottom of the tank. The ozone generator is turned on periodically with a timer or, if the water purification is carried out in a cold water tank, together with a thermostat of the tank.

U.S. Patent No. 5,213,773 describes a device for ozone water treatment connected to the main water supply that has a tank for water treatment where water is treated by ozone and then the treated water is poured out into an accumulating reservoir. The flow of water into the accumulating reservoir can occur under the action of gravity or be assisted by a pump. A control unit regulates the flow of water and ozone into the tank either upon a signal from the dispensing tap or responsive to the water level in the accumulating reservoir. To reduce the amount of ozone in the dispensed water, the inventor proposes to run water through activated coal, irradiate with ultraviolet radiation or just wait a few minutes before using this water.

Another example of a drinking water dispenser that uses ozone for water sterilization is described in CN 1 483 686 A (ZHU QINGJUN). In this dispenser, water from a supply line is first filtered by a GAC filter and then poured into a storage tank. The storage tank is equipped with UV radiation sources. The water taken from the storage tank is also mixed with ozone and pumped back to the storage tank into which it is sprinkled through a sprinkler head located in the upper part of the tank over the water surface. The ultraviolet irradiation does not improve the organoleptic properties of water, whereas the water in the storage tank that is saturated with ozone cannot be used for some time until the ozone is disintegrated.

Thus, it is desirable to provide a water dispenser with such a system of water deodorizing that would ensure a delay-free water run. Also, it is desirable that the system would not depend on the water pressure in the pipelines and would not require use of additional water pumps.

It is desirable to create such a water deodorizing system that would improve not only the smell but also other organoleptic characteristics of water, in particular taste. And finally, it is desirable that the system would be simple and reliable.

### Summary of invention

These and other problems are solved together or separately in the drinking water dispenser with an integrated gravity-flow type system of water deodorizing using ozone.

To carry out water deodorizing while ensuring uninterrupted operation of the water dispenser a two-stage water treatment is used. First, water is supplied to the reaction chamber where it is subject to a short-term exposure to an ozone-air mixture with a relatively low concentration of ozone and then the water flows out by a drop leakage to the accumulating reservoir of the dispenser from which the water is dispensed to consumers.

For this purpose a drinking water dispenser with an integrated gravity-flow type water deodorizing system is used that contains an air-tight accumulating reservoir for drinking water when an air pressure inside the reservoir is maintained above the atmospheric pressure, thus preventing the entry of unpurified outside air; and a reaction chamber for treatment of water by ozone, the chamber having a channel for the supply of water from the delivery pipeline, an input for the supply of ozone, a channel for release of gases, and an output for leaking of the ozone-treated water to the accumulating reservoir. The reaction chamber is additionally equipped with an ultrasonic irradiator. At the same time the output of the reaction chamber for leaking of the ozone-treated water to the accumulating reservoir is provided with a rain-drop-flow formation device, which provides flowing of the ozone-treaded water by the drop leakage or flow into the accumulating reservoir, thus reducing concentration of ozone n the water to an acceptable level by means of aeration of the falling drops.

This rain-drop-flow of water is additionally blown over by purified air-- the dispenser may be provided with additional means for blowing purified air on the rain-drop-flow of water --which leads to the extraction of excessive ozone to a destructor and does not increase the concentration of ozone in the purified water in the accumulating reservoir.

As it unexpectedly occurred, the treatment of water with ozone with following drop leaking of the treated water by a rain-drop-flow to the storage water tank or accumulating reservoir in some cases leads to a significant improvement of not only smell but also taste of the water.

Such treatment of water by ozone improves organoleptic properties of water without disrupting dispenser's operation. And it does not increase the content of ozone in the dispensed water.

Preferably, a bubbling method is used for feeding ozone into water, wherein the ozone-air mixture is supplied into the reactor chamber through a diffuser or bubbling device that creates a lot of tiny bubbles in the water filling the reactor chamber. With this method the quality of treatment does not depend on the pressure of water flowing into the reactor chamber and therefore does not depend on the water pressure in the water main.

In a preferred embodiment the reactor chamber has a bubble bath located in such way that water does not flow out of the chamber until the bubble bath is full. For example, the bubble bath may be formed by a concavity in the top surface of the diffuser.

The rain-drop-flow formation device should provide outflow of water by rain-drop-flow with a certain speed necessary for normal operation of the dispenser, it is desirable for the formation device to provide a flow speed that is not less than the speed of water delivery to consumers. For example, if the speed of pouring water from the dispenser is 200 g per 6 seconds or 0.034 l/s, then based on the size of drops not more than 4 mm, it follows that the device must provide approximately 1,030 drops per second, and for drops of 2 mm size 12,500 drops per second. Considering the average speed of outflow from one opening be 4 drops per second, the rain-drop-flow formation device must have at least 200 discrete openings or holes for leaking of water.

The effect of the deodorizing is most perceptible when the dispenser is connected to the municipal water supply, in this case improving the organoleptic properties of water in the proposed device takes place due to the decrease of concentration of residual chlorine used for disinfection of drinking water at the water treatment plant as well as due to the removal of other contaminants such as cyanides, cyanates, various organic acids, synthetic detergents, remaining in the water after flushing of pipes, rhodanite, hydrogen sulfide, sulfur dioxide, which are contaminating water in the pipelines on the way from the water treatment plant to the consumer. Chlorine as well as other harmful impurities contained in the tapwater may not be removed by household filters. Besides, the degree of removal of contaminants from drinking water by household filters which, as a rule, are filters based on activated carbon, is highly dependent on the quality of used coal and the filter usage time. In the beginning of the usage the removal of contaminants is maximal but it decreases over time, more and more letting chlorine, cyanides, cyanates, various organic acids, detergents, rhodanite, hydrogen sulfide and sulfur dioxide to pass through.

The presence of impurities leads to a deterioration of the water taste. Moreover, because chlorine, cyanides, some organic acids are carcinogens, their presence in drinking water even in the amounts allowed by sanitary norms can be harmful. In addition, the task of removing harmful gases from water such as hydrogen sulfide, etc. cannot be solved by conventional filters, because they do not have a gas separation and removal system.

In the proposed system the treatment of water with ozone in the reaction chamber disintegrates a number of toxic contaminants that may be found in drinking water. During the reaction these toxic impurities are disintegrated into clean water and gaseous elements that are removed to the destructor thus improving the organoleptic characteristics of water.

In particular, cyanides and cyanates are disintegrated into clean water, nitrogen, oxygen and carbon dioxide; organic acids, alkaloids, aldehydes and ketones, andolefins are disintegrated into clean water, oxygen, and carbon dioxide; sulfur-containing impurities such as synthetic detergents, and rhodanite, hydrogen sulfide, sulfur dioxide, typically constituting a large share of contamination are disintegrated actively by ozone into clean water, volatile oxides of sulfur, oxygen, and carbon dioxide.

Removal of gaseous reaction products from the reaction chamber and the subsequent water drop aeration in the atmosphere of purified air in the deozonating chamber provides for substantially better purification of drinking water from chlorine and other harmful substances and improves the organoleptic quality of water, as well as its usefulness to humans. Thus the proposed system significantly improves taste, smell, and color of drinking water as well as allows to get rid of any harmful substances in the water. This effect is achieved by disintegration of the impurities in supplied water into gases - oxides of harmful impurities that are removed from the reaction chamber through the destructor to the external environments and into clean drinking water (H₂O) that is supplied to the accumulating reservoir.

Depending on the configuration of the dispenser the system can be installed either in a tank for the room temperature water or in the cold tank. For example, the dispenser may have a tank for room temperature water, hot water tank, a tank for cold water and carbonated water tank in this case it is advisable to install the deodorizing system in the tank for room temperature water and deliver water to the other tanks from there.

If necessary the system may also be installed in a separate tank or container exclusively designed for water purification. After treatment the purified water can be supplied to the cold tank, hot water tank, and tank for carbonated water.

### Definition of used terms

**Bubbling** is the process of running gas or vapor through a layer of liquid.

Under the **air-tight** accumulating reservoir or water tank in the context of this application it should be understood that the accumulating reservoirs for water is protected from uncontrollable penetration of outdoor air into the reservoir.

**Deodorizing water** is a process of elimination of odors and tastes from drinking water caused by the impurities of foreign substances in the water.

**Drop leakage** is a leakage of water through the droplet formation device in form of discrete droplets (weighing not more than 0,033 grams or having not more than 4 mm diameter).

**Rain-drop-flow** in the context of the present application is the flow of water comprising a plurality of discrete droplets with an intensity of at least 0,015 l/s.

**Drop aeration** is removal of gaseous impurities from water by passing of water droplets through the air flow with the substitution of gaseous impurities contained in water for purified atmospheric air.

Under **partial sterilization** in the context of the present application it should be understood reduction of microbiological population in the water.

**Wetting** is the ability of a liquid to maintain contact with a solid surface, resulting from intermolecular interactions when the two are brought together. The degree of wetting (wettability) is determined by a force balance between adhesive and cohesive forces.

### List of drawings

Figure 1 shows a general diagram of an embodiment of the dispenser with an integrated gravity-flow type deodorizing system.
Figure 2 shows a rain-drop-flow formation device of rain-drop-flow of drinking water.
Figure 3 shows another embodiment of the system with an ultrasonic irradiator in the reaction chamber.
Figure 4 shows yet another embodiment of the dispenser.
Figures 5 A-C show configuration options of the dispenser.

### Description of embodiments

The proposed dispenser with an integrated gravity-flow type system of water deodorizing provides removal of odors and tastes from drinking water using oxidation of impurities with ozone from ozone-air mixture supplied to the system with the side effect of partial sterilization of drinking water which prevents the re-occurrence of undesirable odors and flavors in the water.

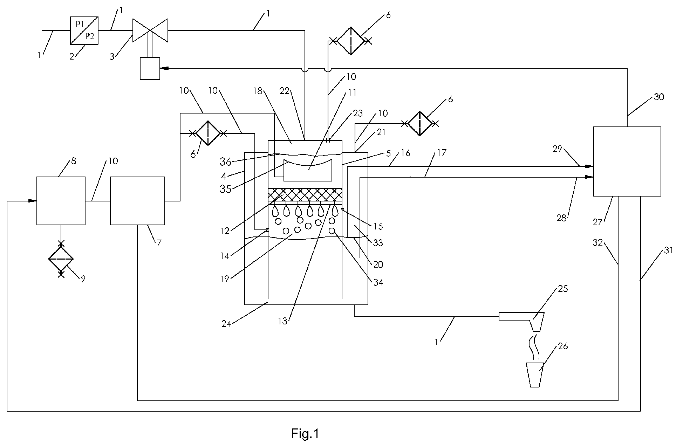

As shown in Figure 1, a drinking water dispenser with an integrated flow-through gravity type system of water deodorizing consists of:
- a delivery pipeline 1 for the supply and distribution of drinking water in the system;
- a pressure reducer 2 and a solenoid valve 3 for controlling the flow of drinking water at the entrance channel of water pouring into the reaction chamber 18 embodied as a reaction-bubbling chamber; by the control of the flow of water the balance is achieved between water supplied in the reaction chamber 18 and water drops 34 leaking from the reaction chamber 18 thus preventing the outflow of water to the input of the filter- destructor of ozone 6;
- an accumulating reservoirs 4 for storing treated drinking water;
- a case 5 of water deodorizing system that comprises two main chambers of the water deodorizing system the reaction chamber 18 and deozonating chamber 19;
- filter-destructors of ozone 6 for decomposition and removal of ozone from ozone-air mixture at various points of the drinking water deodorizing system;
- a generator of ozone-air mixture 7 designed to produce an ozone-air mixture from the incoming air;
- an air pump 8 for supplying air to the drinking water deodorizing system;
- an air filter 9 to clean the incoming air from impurities;
- an air pipeline 10 for distribution of air and ozone-air mixture inside the drinking water deodorizing system, the pipeline 10 is made of material resistant to ozone;
- a diffuser of ozone-air mixture 11 for mixing water and ozone-air mixture by a bubbling method thus achieving the most complete reaction of ozone with impurities;
- a flow-through carbon filter 12 for removing the products of reaction with ozone and partially ozone from drinking water;
- a rain-drop-flow formation device 13 for creation of a water flow in form of discrete droplets, the device 13 being placed between the reaction chamber 18 and drinking water deozonating chamber 19; this formation device must ensure the formation of drops with a diameter not exceeding 4 mm and weigh not exceeding 0,033 grams providing the effective ozone removal from the drinking water, thus eliminating its effect on the water taste and securing the water safety for drinking;
- a channel 14 for air delivery into the deozonating chamber 19 providing the flow of fresh air inside the deozonating chamber 19 for ozone removal from the drinking water;
- a transfer air channel 15 between the deozonating chamber 19 and the accumulating reservoir 4 for drinking water for removing ozone-air mixture from the deozonating chamber 19 into an air cavity 33 of the accumulating reservoir 4 for drinking water;
- a maximum water level sensor 16 in the accumulating reservoir 4 for drinking water, designed to detect the maximum level 20 of water in the accumulating reservoir 4 and to provide a control signal 29 to turn off the solenoid valve 3 of water intake and stop the supply of water into the dispenser;
- a water level sensor 17 for detection of a minimal water level in the accumulating reservoir 4 and to provide a control signal 28 for turning on the electromagnetic water intake valve 3 to start pouring water in the dispenser;
- a reaction chamber 18 for mixing water and ozone-air mixture by bubbling method to ensure the best possible reaction of ozone with impurities in the drinking water;
- a deozonating chamber 19 for the most complete removal of residual ozone from the treated drinking water by method of drop aeration in a flow of filtered and sterilized atmospheric air;
- a channel 21 for ozone-air mixture release from the accumulating reservoir 4, through this channel an ozone-air mixture of a low concentration from the air cavity 33 of the accumulating reservoir 4 flows to the filter-destructor of ozone 6 where ozone is removed from the mixture prior to air discharge into the atmosphere;
- a channel 22 for supplying water supply to the reaction chamber 18 from the water delivery pipeline 1;
- a channel 23 for of ozone-air mixture release from the reaction chamber 18, through this channel an ozone-air mixture from the reaction chamber 18 flows into the filter-destructor of ozone 6 before being discharged the air into the atmosphere;
- a faucet 25 for dispensing water into consumer's container 26;
- a controlling device 27 to control the deodorizing system of drinking water, in particular for forming control signals to switch the solenoid water intake valve 30, air pump 31 and generator of ozone-air mixture 32 on the basis of the control signals 28, 29 from the water level sensors 16, 17 in the accumulating reservoir 4 and reaction chamber 18.

Let's describe the operation of the drinking water dispenser with an integrated gravity-flow type system of water deodorizing.

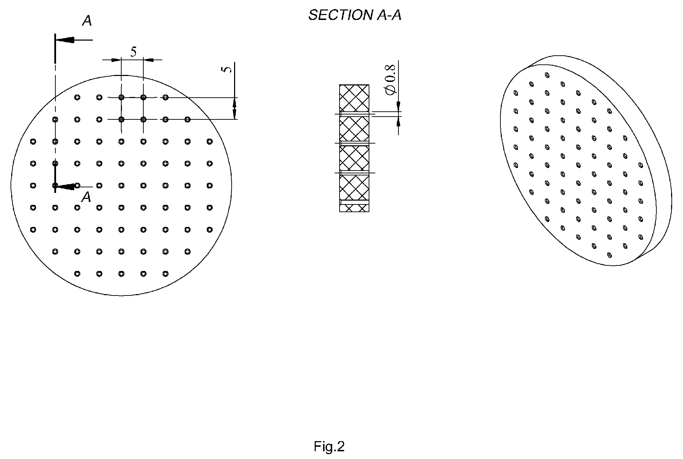

When the control signal 28 is received from the water level sensor 17, the control device 27 turns on the generator of ozone-air mixture 7, air pump 8, and, with a 0.5 second delay, the drinking water intake solenoid valve 3. After start of the ozone-air mixture generator 7 and air pump 8, the ozone-air mixture enters the diffuser of ozone-air mixture 11 where thin jets of ozone-air mixture are formed; the ozone-air mixture also flows to the input of the filter-destructor 6 where ozone is removed from the mixture and after that the sterilized and purified air is supplied through the channel of air supply 14 into the deozonating chamber 19; when, after a 0.5 second delay the water intake solenoid valve 3 opens, the water from the delivery pipeline 1 flows through the channel of water supply 22 into the reaction chamber 18. The channel of water supply 22 is located in such a way that the water flow enters into the center of the cove 35 in the surface of diffuser 11 where the mixing of treated drinking water and ozone-air mixture takes place by bubbling method; the subsequent supply of water displaces the treated water in the cove 35 and the treated water flows over the edges of the cove35 filling in the reaction chamber 18 where because of hydraulic resistance of the activated carbon filter 12 and rain-drop-flow formation device 13 the operating water level 36 is maintained. Because the density of the ozone-air mixture is lower than the water density, the largest part of the ozon-air mixture is bubbling out of the treated water. The treated water is further supplied to the flow-through activated carbon filter 12 where the dissolved in the water products of the reaction between impurities and ozone are removed. Instead of an activated carbon filter 12 or in addition to it, if needed or desired by the customers, an additional water treatment device may be installed such as a catalytic filter, magnetization device, a device for structuring and clustering of water, etc. As our experimental testing demonstrated the presence of such an additional device between the reaction chamber 18 and the rain-drop-flow formation device 13 does not disturb the operation of the proposed device. After the filter 12 the water is supplied to the rain-drop-flow formation device 13. In the embodiment shown in details in Figure 2, the formation device 13 is a membrane with holes not less than 0.8 mm and the distance between the centers of adjacent holes not less than 5 mm, the membrane is made of non-wettable material, the hole diameter is strongly dependent on the material used and the pressure in the reaction chamber 18, and the desired diameter of droplets; the distance between the centers of the holes is determined by the maximum diameter of the formed droplets. The use of non-wettable material allows to form individual droplets without neighboring droplets being mixed because of water spreading on the membrane surface due to the wetting of the surface. After separation from to the formation device 13 the formed droplets fall by action of gravity through the atmosphere of purified and sterilized air where the final disposal of residual ozone from the drinking water takes place by gaseous exchange of ozone with purified air. The minimum required distance for the fall of droplets till the water surface obtained experimentally is at least six maximum diameters of the droplets that in case of the droplets with a diameter of 4 mm is 24 mm. Used air having a low concentration of ozone flows through the transfer air channel 15 to the air cavity 33 of the accumulating reservoir 4 and from there through the filter-destructor 6 is removed to the atmosphere; a positive side effect of this scheme is incidental partial sterilization of the air cavity 33 of accumulating reservoir 4. After deozonation the drinking water from the deozonating chamber 19, through the water outflow channel 24 flows into the accumulating reservoir 4. The use of such a scheme for filling the accumulating reservoirs 4 provides for the most complete and uniform mixing of previously treated water and newly treated water which prevents the creation of still water zones in the stored drinking water; besides that, it also eliminates the influence of the water flows on the water level sensors 16 and 17 and therefore false responses of the control device 27. After drinking water fills up the accumulating reservoir 4, according to the control signal from the sensor of maximum water level 29 the controlling device 27 turns off the water intake solenoid valve 3 and terminates the supply of water to the system. The air pump 8 and ozone-air mixture generator 7 are turned off with a delay in about 8 seconds after turning off the water supply. During this time the reaction chamber 18 is emptied of the remaining water and the ozone-air mixture flowing through the filter 12 and the formation device 13 fills in the air cavities of the dispenser, thus providing a partial sterilization of dispenser's air cavities; at the same time because of poor solubility of ozone in water and its low concentration the ozone from the air cavities does not affect the taste of drinking water in the accumulating reservoir 4. After taking of water by the consumer and lowering the water level in the accumulating reservoir 4 up to the level of triggering of the water level sensor 17 the drinking water intake solenoid valve 3 is turned on and the process of water deodorizing is repeated.

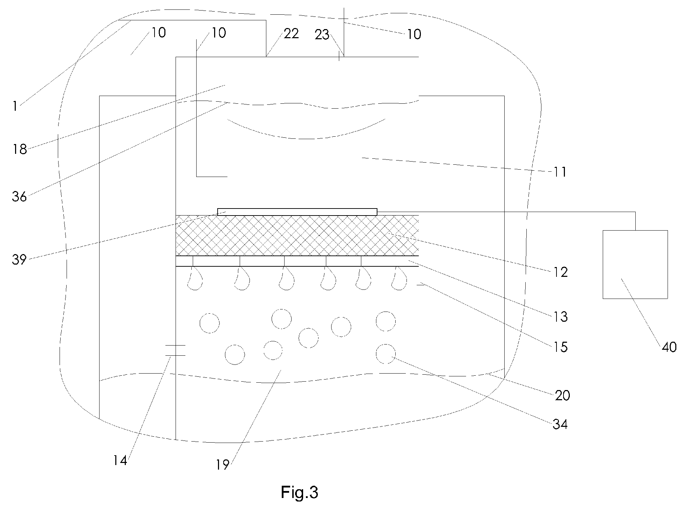

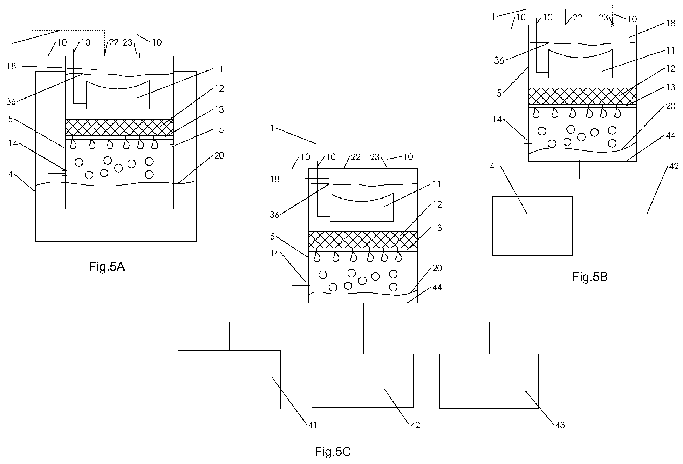

The reaction chamber 18 is additionally equipped with an ultrasonic irradiator 39 connected to an ultrasonic generator 40 as shown in enlarged view in Figure 3. The irradiator 39 is turned on during filling of the chamber 18 with water and causes acoustic vibrations of ultrasonic frequency in water filling the chamber 18. These vibrations cause a cavitation effect which increases the solubility of ozone in water as well as enhances the deodorizing and disinfecting effect of ozone. Also, when using sound waves of specific frequencies, the sound can have a positive impact on the structure of water.

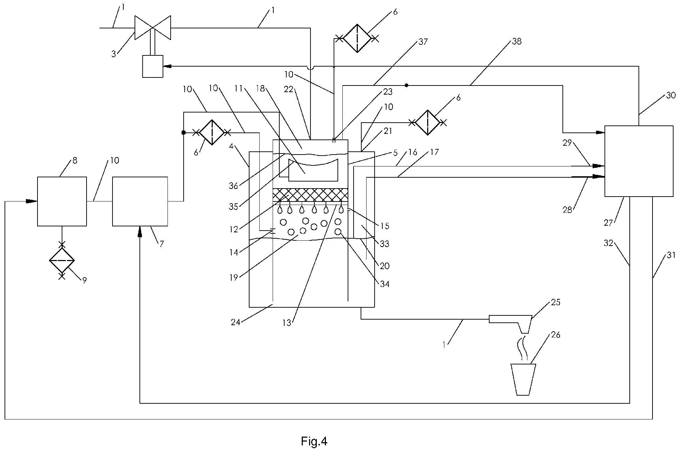

Figure 4 shows an optional embodiment of the drinking water dispenser with an integrated gravity-flow type system of water deodorizing that is different from the one described above in that in order to control the operational water level in the reaction chamber 18 a sensor 37 of the maximum water level in the reaction chamber 18 is used. In accordance with the control signal 38 from the sensor 37 the control device 27 turns off the water supply to the reaction chamber 18 when the water level reaches the maximum and resumes the water supply when the water level drops below the triggering level of water level sensor 37. Application of this control scheme improves the operation of the reaction chamber 18 because in the chamber the optimal water level is maintained that does not dependent on parameters of the delivery pipeline; besides that this scheme provides additional protection of the dispenser against the water spillage through the filter-destructor of ozone 6.
In the above described embodiments of the dispenser the integrated deodorizing water system is located inside the accumulating reservoir 4 which is the reservoir for cold water or cold tank. Figure 5 shows further embodiments of the dispenser in which the reaction chamber 18 and deozonating chamber 19 are located outside the cold tank; there the air-tight water tank where occurs the rain-drop flow is formed by the walls of the chambers 18, 19 and the bottom 44. In Figure 5A for comparison is shows a variant with the deodorizing system is installed inside of the cold tank or accumulation reservoir 4. In Figure 5B the deodoarizing system is installed outside of the cold tank, and the treated water from the deodorizing system is supplied to the cold water tank 41 and to the tank for room temperature water 42. In yet another embodiment shown in Figure 5C the deodorizing system is also installed outside the cold tank, and the treated water from the deodorizing system is supplied to the cold water tank 41, to the tank for room temperature water 42 and the hot water tank 43.

**List of items in drawings.**

| Number | Item |
|---|---|
| 1 | delivery pipeline |
| 2 | pressure reducer |
| 3 | solenoid valve |
| 4 | accumulating reservoir for drinking water |
| 5 | case of water deodorizing system |
| 6 | filter-destructor of ozone |
| 7 | generator of ozone-air mixture |
| 8 | air pump |
| 9 | air filter |
| 10 | air pipelines |
| 11 | diffuser of ozone-air mixture |
| 12 | flow-through water filter |
| 13 | rain-drop-flow formation device |
| 14 | channel for air delivery into the deozonating chamber |
| 15 | transfer air channel |
| 16 | maximum water level sensor in the accumulating reservoir |
| 17 | water level sensor of opening of drinking water intake solenoid valve |
| 18 | reaction chamber |
| 19 | water deozonating chamber |
| 20 | maximum level of water in the accumulating reservoir |
| 21 | channel for release of ozone-air mixture from the accumulating reservoir |
| 22 | channel of water supply into the reaction chamber |
| 23 | channel of release of ozone-air mixture from the reaction chamber |
| 24 | channel of drinking water outflow from the deozonating chamber into the accumulating reservoir |
| 25 | a faucet |
| 26 | a consumer's container |
| 27 | control device of the deodorizing system |
| 28 | control signal from the water level sensor |
| 29 | control signal from the sensor of the maximum water level |
| 30 | control signal for opening of the water intake solenoid valve |
| 31 | control signal switching the air pump |
| 32 | control signal switching the ozone-air mixture generator |
| 33 | air cavity in the accumulating reservoir |
| 34 | water drops flowing from the reaction chamber |
| 35 | cove in the diffuser of ozone-air mixture |
| 36 | operating water level in the reaction chamber |
| 37 | maximum water level sensor in the reaction chamber |
| 38 | control signal on exceeding of operating water level |
| 39 | ultrasonic irradiator |
| 40 | ultrasonic frequency generator |
| 41 | cold water tank |
| 42 | tank for room temperature water |
| 43 | hot water tank |
| 44 | bottom |

## Claims

1. A drinking water dispenser with an integrated gravity-flow type deodorizing system comprising:
an air-tight accumulating reservoir for drinking water (4),
a reaction chamber (18) for treatment of water by ozone having a channel (22) for the supply of water from the delivery pipeline (1), an input for the supply of ozone, a channel (23) for release of gases from the reaction chamber (18), and an output for leaking of the ozone-treated water to the accumulating reservoir (4),
wherein the output of the reaction chamber (18) for leaking of the ozone-treated water to the accumulating reservoir (4) is provided with a rain-drop-flow formation device (13), which provides flowing under the action of the gravity force of the ozone-treaded water from the reaction chamber (18) by rain-drop-flow into the accumulating reservoir (4);
wherein the reaction chamber (18) is equipped with an ultrasonic irradiator (39); and
wherein the dispenser further comprises means (6, 10, 14, 15) for blowing purified air on the rain-drop-flow of water falling from the formation device (13).

2. The drinking water dispenser according to claim 1 wherein the rain-drop-flow formation device (13) provides flowing of water at a rate from 0.015 to 0.05 liters per second.

3. The drinking water dispenser according to claim 1 wherein the rain-drop-flow formation device (13) provides the formation of droplets of an average size from 0.5 to 4 mm.

4. The drinking water dispenser according to claim 1 wherein the rain-drop-flow formation device (13) provides the formation of the flow of droplets with density not less than 10 drops per cm².

5. The drinking water dispenser according to claim 1 wherein the rain-drop-flow formation device (13) is installed in such a way that the height of fall of droplets on the surface of water stored in the accumulating reservoir (4) is not less than 5 cm.

6. The drinking water dispenser according to claim 5 wherein the height of fall of droplets is not less than 10 cm.

7. The drinking water dispenser according to claim 1 wherein the rain-drop-flow formation device (13) provides the rain-drop-flow with a speed of more than 800 drops per second.

8. The drinking water dispenser according to claim 1 wherein the water flow through the reaction chamber (18) happens due to the action of the gravity force.

9. The drinking water dispenser according to claim 1 wherein the rain-drop-flow formation device (13) is placed inside of a deodorizing chamber (19) having a shape of a bell, wherin the lower end of the deodorizing chamber (19) is located below the water level of the accumulating reservoir (4), and the deodorizing chamber (19) has a channel for air delivery (14) and a channel for air release (15) for providing circulation of air in the chamber (19).

10. The drinking water dispenser according to claim 1 which provides such supply speed of ozone and water to the reaction chamber (18) whereby the concentration of ozone in the water at the output of the reaction chamber (18) is in a range from 0.1 to 0.5 g/liter.

11. The drinking water dispenser according to claim 1 in which the reaction chamber (18) contains a bubbling device (11) for feeding ozone into water.

12. The drinking water dispenser according to claim 1 in which the reaction chamber (18) is installed inside the accumulating reservoir for water (4).

13. A method of water deodorizing in a drinking water dispenser supplied from a water main, the method comprising the following steps:
a) treating water with ozone and acoustic vibrations of ultrasonic frequency in a reaction chamber (18) of gravity-flow type and, subsequent by
b) flowing of the ozone-treated water under the action of the gravity force from the reaction chamber (18) by rain-drop-flow into an accumulating reservoir (4), while
c) blowing purified air on the rain-drop-flow of water falling from the formation device (13).

## Patentansprüche

1. Trinkwasser-Spender mit einem integrierten, geruchsbeseitigenden System vom Schwerkraft-Strom-Typ, umfassend:
einen luftdichten Sammelbehälter für Trinkwasser (4),
eine Reaktionskammer (18) zur Behandlung von Wasser mit Ozon, die einen Kanal (22) für die Versorgung mit Wasser aus der Zuführungsleitung (1), einen Zugang für die Versorgung mit Ozon, einen Kanal (23) zur Freisetzung von Gasen aus der Reaktionskammer (18) und eine Ausgabe zum Austreten des Ozon-behandelten Wassers zu dem Sammelbehälter (4) aufweist,
wobei die Ausgabe von der Reaktionskammer (18) zum Austreten des Ozon-behandelten Wassers zu dem Sammelbehälter (4) mit einer Vorrichtung (13) zur Bildung eines fallenden Tropfen-Stroms versehen ist, welche Strömen des Ozon-behandelten Wassers aus der Reaktionskammer (18) unter der Wirkung der Schwerkraft durch einen fallenden Tropfen-Strom in den Sammelbehälter (4) vorsieht;
wobei die Reaktionskammer (18) mit einem Ultraschall-Geber (39) ausgestattet ist; und
wobei der Spender weiterhin Mittel (6, 10, 14, 15) zum Blasen gereinigter Luft auf den fallenden Tropfen-Strom von Wasser, das aus der Bildungs-Vorrichtung (13) fällt, umfasst.

2. Trinkwasser-Spender nach Anspruch 1, wobei die Vorrichtung (13) zur Bildung eines fallenden Tropfen-Stroms Strömen von Wasser bei einer Geschwindigkeit von 0,015 bis 0,05 Litern pro Sekunde vorsieht.

3. Trinkwasser-Spender nach Anspruch 1, wobei die Vorrichtung (13) zur Bildung eines fallenden Tropfen-Stroms die Bildung von Tröpfchen von einer mittleren Größe von 0,5 bis 4 mm vorsieht.

4. Trinkwasser-Spender nach Anspruch 1, wobei die Vorrichtung (13) zur Bildung eines fallenden Tropfen-Stroms die Bildung des Tröpfchen-Stroms mit einer Dichte von nicht weniger als 10 Tropfen pro cm² vorsieht.

5. Trinkwasser-Spender nach Anspruch 1, wobei die Vorrichtung (13) zur Bildung eines fallenden Tropfen-Stroms in einer derartigen Weise installiert ist, dass die Fallhöhe der Tröpfchen auf die Oberfläche des Wassers, das in dem Sammelbehälter (4) gespeichert wird, nicht weniger als 5 cm beträgt.

6. Trinkwasser-Spender nach Anspruch 5, wobei die Fallhöhe der Tröpfchen nicht weniger als 10 cm beträgt.

7. Trinkwasser-Spender nach Anspruch 1, wobei die Vorrichtung (13) zur Bildung eines fallenden Tropfen-Stroms den fallenden Tropfen-Strom mit einer Geschwindigkeit von mehr als 800 Tropfen pro Sekunde vorsieht.

8. Trinkwasser-Spender nach Anspruch 1, wobei der Wasser-Strom durch die Reaktionskammer (18) auf Grund der Wirkung der Schwerkraft stattfindet.

9. Trinkwasser-Spender nach Anspruch 1, wobei die Vorrichtung (13) zur Bildung eines fallenden Tropfen-Stroms im Inneren einer glockenförmigen, geruchsbeseitigenden Kammer (19) angeordnet ist, wobei sich das untere Ende der geruchsbeseitigenden Kammer (19) unter dem Wasserspiegel des Sammelbehälters (4) befindet, und die geruchsbeseitigende Kammer (19) einen Kanal zur Luftzuführung (14) und einen Kanal zur Luftfreisetzung (15) zum Bereitstellen einer Luft-Zirkulation in der Kammer (19) aufweist.

10. Trinkwasser-Spender nach Anspruch 1, welcher eine derartige Versorgungsgeschwindigkeit von Ozon und Wasser zu der Reaktionskammer (18) vorsieht, wodurch die Konzentration von Ozon in dem Wasser bei der Ausgabe von der Reaktionskammer (18) in einem Bereich von 0,1 bis 0,5 g/Liter liegt.

11. Trinkwasser-Spender nach Anspruch 1, in welchem die Reaktionskammer (18) eine Sprudelvorrichtung (11) zum Zuführen von Ozon in Wasser enthält.

12. Trinkwasser-Spender nach Anspruch 1, in welchem die Reaktionskammer (18) im Inneren des Sammelbehälters für Wasser (4) installiert ist.

13. Verfahren zum Geruchsbeseitigen von Wasser in einem Trinkwasser-Spender, der aus einer Wasserhauptleitung gespeist wird, wobei das Verfahren die nachstehenden Schritte umfasst:
a) Behandeln von Wasser mit Ozon und akustischen Vibrationen von Ultraschallfrequenz in einer Reaktionskammer (18) vom Schwerkraft-Strom-Typ und anschließend durch
b) Strömen des Ozon-behandelten Wassers unter der Wirkung der Schwerkraft aus der Reaktionskammer (18) durch einen fallenden Tropfen-Strom in einen Sammelbehälter (4), während
c) des Einleitens gereinigter Luft auf den fallenden Tropfen-Strom von Wasser, das aus der Bildungs-Vorrichtung (13) fällt.

## Revendications

1. Distributeur d'eau potable comprenant un système de désodorisation intégré du type à écoulement sous l'effet de la pesanteur, comprenant :
un réservoir d'accumulation étanche à l'air pour l'eau potable (4) ;
une chambre de réaction (18) pour soumettre l'eau à un traitement à l'ozone, comportant un canal (22) pour l'alimentation de l'eau à partir de la canalisation de distribution (1), une entrée pour l'alimentation de l'ozone, un canal (23) pour l'évacuation des gaz à partir de la chambre de réaction (18), et une sortie pour l'échappement de l'eau traitée à l'ozone en direction du réservoir d'accumulation (4) ;
dans lequel la sortie de la chambre de réaction (18) pour la fuite de l'eau traitée à l'ozone en direction du réservoir d'accumulation (4) est munie d'un dispositif (13) de formation d'un écoulement en gouttes de pluie, qui procure un écoulement, sous l'effet de la pesanteur, de l'eau traitée à l'ozone à partir de la chambre de réaction (18), via un écoulement en gouttes de pluie, jusque dans le réservoir d'accumulation (4) ;
dans lequel la chambre de réaction (18) est équipée d'un émetteur d'ultrasons (39) ; et
dans lequel le distributeur comprend en outre des moyens (6, 10, 14, 15) pour insuffler de l'air purifié sur l'écoulement de l'eau en gouttes de pluie tombant du dispositif de formation (13).

2. Distributeur d'eau potable selon la revendication 1, dans lequel le dispositif (13) de formation d'un écoulement en gouttes de pluie procure un écoulement d'eau à un débit de 0,015 à 0,05 litre par seconde.

3. Distributeur d'eau potable selon la revendication 1, dans lequel le dispositif (13) de formation d'un écoulement en gouttes de pluie procure la formation de gouttelettes dont la dimension moyenne s'élève de 0,5 à 4 mm.

4. Distributeur d'eau potable selon la revendication 1, dans lequel le dispositif (13) de formation d'un écoulement en gouttes de pluie procure la formation de l'écoulement de gouttelettes avec une masse spécifique qui n'est pas inférieure à 10 gouttes par cm².

5. Distributeur d'eau potable selon la revendication 1, dans lequel le dispositif (13) de formation d'un écoulement en gouttes de pluie est monté d'une manière telle que la hauteur de chute des gouttelettes sur la surface de l'eau stockée dans le réservoir d'accumulation (4) n'est pas inférieure à 5 cm.

6. Distributeur d'eau potable selon la revendication 5, dans lequel la hauteur de chute des gouttelettes n'est pas inférieure à 10 cm.

7. Distributeur d'eau potable selon la revendication 1, dans lequel le dispositif (13) de formation d'un écoulement en gouttes de pluie procure l'écoulement en gouttes de pluie avec une vitesse qui n'est pas supérieure à 800 gouttes par seconde.

8. Distributeur d'eau potable selon la revendication 1, dans lequel l'écoulement de l'eau à travers la chambre de réaction (18) a lieu sous l'effet de la pesanteur.

9. Distributeur d'eau potable selon la revendication 1, dans lequel le dispositif (13) de formation d'un écoulement en gouttes de pluie est monté à l'intérieur d'une chambre de désodorisation (19) possédant la configuration d'une cloche, l'extrémité inférieure de la chambre de désodorisation (19) étant située en dessous du niveau d'eau du réservoir d'accumulation (4), et la chambre de désodorisation (19) possède un canal pour la distribution d'air (14) et un canal pour l'évacuation de l'air (15) afin de procurer une circulation d'air dans la chambre (19).

10. Distributeur d'eau potable selon la revendication 1, qui fournit une vitesse d'alimentation de l'ozone et de l'eau à la chambre de réaction (18), telle que la concentration de l'ozone dans l'eau à la sortie de la chambre de réaction (18) se situe dans la plage de 0,1 à 0,5 g/litre.

11. Distributeur d'eau potable selon la revendication 1, dans lequel la chambre de réaction (18) contient un dispositif de barbotage (11) pour l'alimentation d'ozone dans l'eau.

12. Distributeur d'eau potable selon la revendication 1, dans lequel la chambre de réaction (18) est montée à l'intérieur du réservoir d'accumulation pour l'eau (4).

13. Procédé de désodorisation de l'eau dans un distributeur de l'eau potable à partir de la conduite principale d'eau, le procédé comprenant les étapes suivantes dans lesquelles :
a) on traite l'eau avec de l'ozone et on la soumet à des vibrations acoustiques de fréquence ultrasonore dans une chambre de réaction (18) du type à écoulement sous l'effet de la pesanteur; et
b) on fait ensuite s'écouler l'eau traitée à l'ozone, sous l'effet de la pesanteur, à partir de la chambre de réaction (18) via un écoulement en gouttes de pluie jusque dans un réservoir d'accumulation (4) ;
c) tout en insufflant de l'air purifié sur l'écoulement d'eau en gouttes de pluie tombant du dispositif de formation (13).
